# EUROPEAN PATENT SPECIFICATION

(11) **EP 0 965 223 B1**
(45) Date of publication and mention of the grant of the patent: **13.07.2005**
(21) Application number: 98900152.4
(22) Date of filing: 06.01.1998
(51) Int. Cl.: H04N 7/20, H04N 7/22, H04N 7/10

(54) **SATELLITE DISTRIBUTED TELEVISION**
VERTEILUNG VON FERNSEHSIGNALEN DURCH SATELLITEN
DISTRIBUTION DE SIGNAUX DE TELEVISION PAR SATELLITE

(30) Priority: 07.01.1997 IL 11997297; 23.07.1997 US 899452
(43) Date of publication of application: 22.12.1999
(73) Proprietor: Foxcom Ltd., 91430 Jerusalem (IL)
(72) Inventor: FARBER, Allan, 73127 Hashmonaim (IL); ALLON, Mor, 45265 Hod Hasharon (IL); LOBODA, Howard, 96925 Jerusalem (IL)
(74) Representative: Potter, Julian Mark
(86) International application number: PCT/IL1998/000006
(87) International publication number: WO 1998/031133

(56) References cited:
- EP-A- 0 096 327
- EP-A- 0 570 198
- DE-A- 3 935 183
- NL-A- 9 101 040
- US-A- 4 959 862
- US-A- 5 574 964
- US-A- 5 592 540
- PATENT ABSTRACTS OF JAPAN vol. 013, no. 359 (E-804), 10 August 1989 (1989-08-10) & JP 01 119188 A (NIPPON HOSO KYOKAI ;OTHERS: 01), 11 May 1989 (1989-05-11)

## Description

The present invention relates to distribution of satellite signals generally and more particularly to multimode optical fiber links useful in such distribution

### BACKGROUND OF THE INVENTION

The use of optical fibers in cable television networks is well known in the art The following patents are believed to be representative of the state of the art. U S. Patents 5,467,212, 5,499,047, 4,891,694; 5,517,232, 5,442,472; 5,394,182; 5,361,091; 5,345,526; 4,135,202; 5,136,411; 5,181,106; 5,204,767, 5,221,983; 5,303,229; 5,504,609; 5,541,757, 5,572,347; 5,657,143 and 5,659,351. In addition, German Patent Document P4334440 2 describes a system in which TV signals are converted into serial ranges of lower frequencies. These signals are converted into optical signals which are sent to individual user receivers where the optical signals are converted back to electrical signals.

Cable television networks normally operate on AM analog signals in the 5 - 860 MHz frequency range.

Satellite signals are in the GHz range in one of a number of bands, known as L, C, Ku and X bands. Earth station terminals typically downconvert signals to a range of about 0 95 to 2.2 GHz (L-band) by a low noise block converter forming part of most satellite signal receiving antennas. These signals are difficult to transmit via long coaxial links. Single mode optical fibers are known to be used for point to point connections between satellite transceivers and satellite antennas.

In multi-unit dwellings such as apartment buildings, dormitories, prisons and hotels, conventional shared master antenna television (SMATV) distribution systems for satellite television are typically employed. SMATV systems comprise a headend which demodulates, decodes and modulates at low frequency AM television signals which are then distributed using coaxial cable SMATV systems have a number of disadvantages One disadvantage is the number of channels offered is small, typically between 10 and 20 Since the signals are ordinary decoded TV signals, the programming is easily pirated by those not licensed to view the programming. Another disadvantage may be inferior picture quality

Another approach to distribute satellite television signals uses coaxial cable to distribute an L-band signal which is output from a low noise block converter (LNB). Because of the high attenuation of coaxial cable at 1 - 2 GHz, these systems require numerous line amplifiers to overcome losses as well as equalizers to cancel frequency tilt distornons These effects set a pracucal limit on coaxial distribution systems to about 200 users and about 300 meters

With digital satellite TV signals, the accumulated noise and distortion in coaxial cable distribution may cause network failure Each of the network components has a small impedance mismatch. This causes small signal reflections which when summed coherently throughout the network may cause a distorted signal. With digital signals, the receivers may not recover clock pulses This is a known threshold phenomenon and is very difficult to predict.

EPO096327 describes a star-shaped distribution network exhibiting a head station and at least one out-of-area unit to which the subscribers are connected via a star coupler. Between the head station and the out-of-area unit and between the out-of-area unit and the subscribers, there is in each case a single optical waveguide present. The transmission between head station and out-of-area unit and/or out-of-area unit and subscriber device can be effected in wavelength-division multiplex.

NL9101040 describes an optical transmission system for the local network which, in addition to the distribution and exchange of telephony and conventional 'coax-compatible' signals (45-850 MHz), is furthermore used for the distribution of satellite signals (0.9-2 GHz). These signals are fed via this network to the subscribers where they are converted by a conventional 'satellite tuner' into signals which are suitable for the TV set. The advantage is an additional service in which the subscribers are connected via the local optical network to centrally located satellite reception antennas of the highest quality.

US 5,574,964 describes a signal distribution system having a converter with input terminals for receiving signals of varying configurations and an output terminal for transmitting converted signals. The input signals received by the converter are each converted into a converted signal frequency component of a common bus signal, which is then transmitted by the converter. The converter output terminal transmits the common bus signal on a communication bus. The communication bus is coupled to at least one interface pod for receiving the common bus signal and re-transmitting a desired converted signal.

JPO1119188 describes a method for transmitting a CATU signal wherein a BS-IF electric signal from a satellite broadcasting antenna is converted to a BS-IF light signal by a semiconductor laser diode, the light signal is distributed into seven by being inputted to respective multimode optical fibers, and it is transmitted through a light transmitting trunk up to a trunk distributing amplifier (TDA) and a trunk branching amplifier (TBA). In such a way, by executing most of the distribution and transmission of the satellite broadcasting by means of the light signal, the transmission with the electric signal can be restricted in a narrow range in the vicinities of the receiving terminals. Thus, the satellite broadcasting with the high quality can be transmitted to the area of the wide range.

EPO570198 describes an aircraft entertainment system employing a fiber optic distribution system and bidirectional signalling. A C-band or K-band conformal antenna is employed on the surface of the aircraft to receive television signals transmitted from a satellite. Receiving television signals are converted to video signals and these signals are amplified and converted to optical signals using a laser. The optical signals are then coupled to monitors located at the seats in the aircraft by way of the fiber optic distribution system. The fiber optic distribution system routes the optical signals by way of an optical splitter coupled to a plurality of optical fibres that are each coupled to a separate seat group in the aircraft. A photo-detector is located adjacent each seat group and is coupled to a plurality of satellite television receivers locate adjacent each seat in the respective seat group. The satellite television receivers in turn drive individual television monitors provided for the passengers of the aircraft. Passenger service requests an processed by a central computer that is coupled to keypads and/or phones at passenger locations using the fiber optic distribution system. The distribution system includes electronics and optical circuitry that and couple the service requests to the central computer for monitoring.

Particular and preferred aspects of the invention are set out in the appended claims.

### BRIEF DESCRIPTION OF THE DRAWINGS

The present invention will be understood and appreciated by persons skilled in the art from the following detailed description taken in conjunction with the drawings in which:
Fig. 1 is a simplified pictorial illustration of a satellite signal distribution system constructed and operative in accordance with a preferred embodiment of the present invention;
Fig. 2 is a simplified pictorial illustration of a satellite signal distribution system constructed and operative in accordance with another preferred embodiment of the present invention;
Fig. 3 is a sectional illustration taken along lines III - III in Fig. 1, illustrating the use of a composite cable in accordance with one embodiment of the present invention;
Fig. 4 is a simplified pictorial illustration of a multimode optical fiber link carrying an RF signal in accordance with a preferred embodiment of the present invention:
Fig. 5 is a simplified block diagram illustration of an optical transmitter useful in the present invention;
Fig. 6 is a simplified block diagram illustration of a satellite signal receive and distribution unit constructed and operative in accordance with a preferred embodiment of the present invention including apparatus for combining CATV and satellite signal feeds onto a single coaxial cable;
Fig. 7 is a conceptual illustration of combining CATV/UHF/VHF (5-860 MHz) and satellite signals onto a single coaxial cable in accordance with a preferred embodiment of the present invention,
Fig. 8 is a simplified illustration of a frequency spectrum of a satellite signal distribution system using frequency stacking in accordance with a preferred embodiment of the present invention,
Fig. 9 is a simplified block diagram illustration of an optical transmitter satellite-and-television-signal combiner system constructed and operative in accordance with a preferred embodiment of the present invention, and
Fig. 10 is a simplified block diagram illustration of an optical transmitter satellite-and-television-signal combiner system constructed and operative in accordance with another preferred embodiment of the present invention.

### DETAILED DESCRIPTION OF A PREFERRED EMBODIMENT

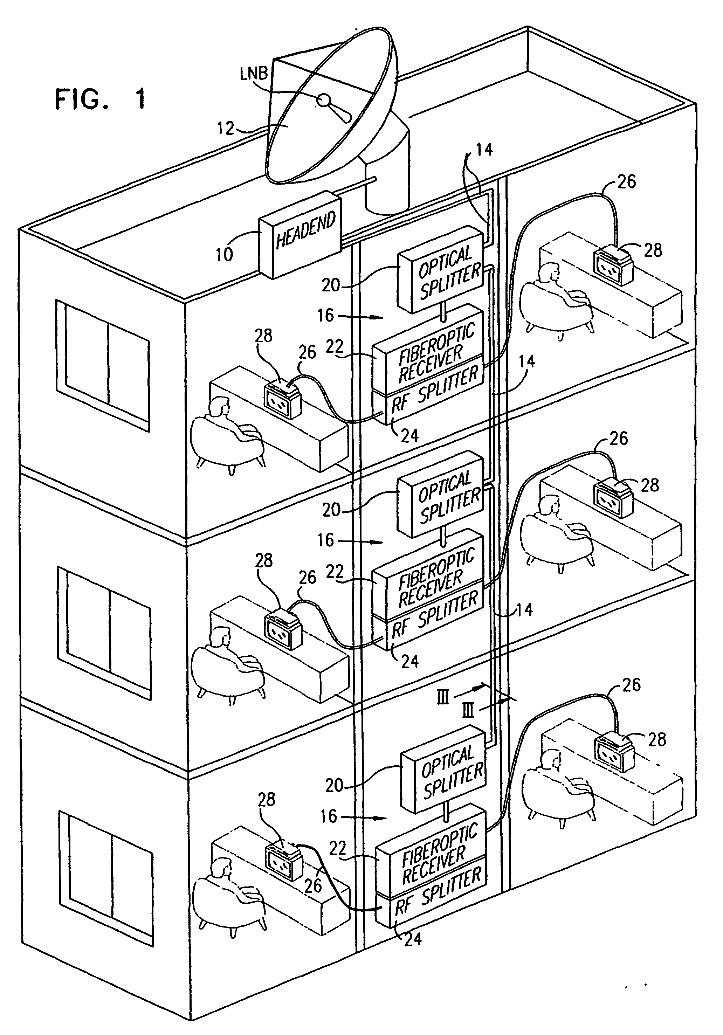

Reference is now made to Fig. 1, which is a simplified pictorial illustration of a satellite signal distribution system constructed and operative in accordance with a preferred embodiment of the present invention. The satellite signal distribution system of the present invention seeks to provide a solution to satellite television distribution in large multi-unit dwellings which cannot adequately be served by existing coaxial networks.

The satellite signal distribution system of Fig. I preferably comprises a headend 10 which receives satellite signals from a satellite antenna 12 and includes an RF fiberoptic transmitter which transmits a combined signal along segments of an optical fiber 14 to which are connected, typically in series, a plurality of satellite signal receive and distribution units 16

Each of the receive and distribution units 16 comprises an optical splitter 20 which splits the received optical signal into a first portion which is supplied to a fiberoptic receiver 22, and a second part which is connected to an additional segment of optical fiber 14. The fiberoptic receiver 22 outputs to an RF splitter 24 which supplies RF signals along individual satellite signal links 26. each of which supplies at least one satellite receiver 28.

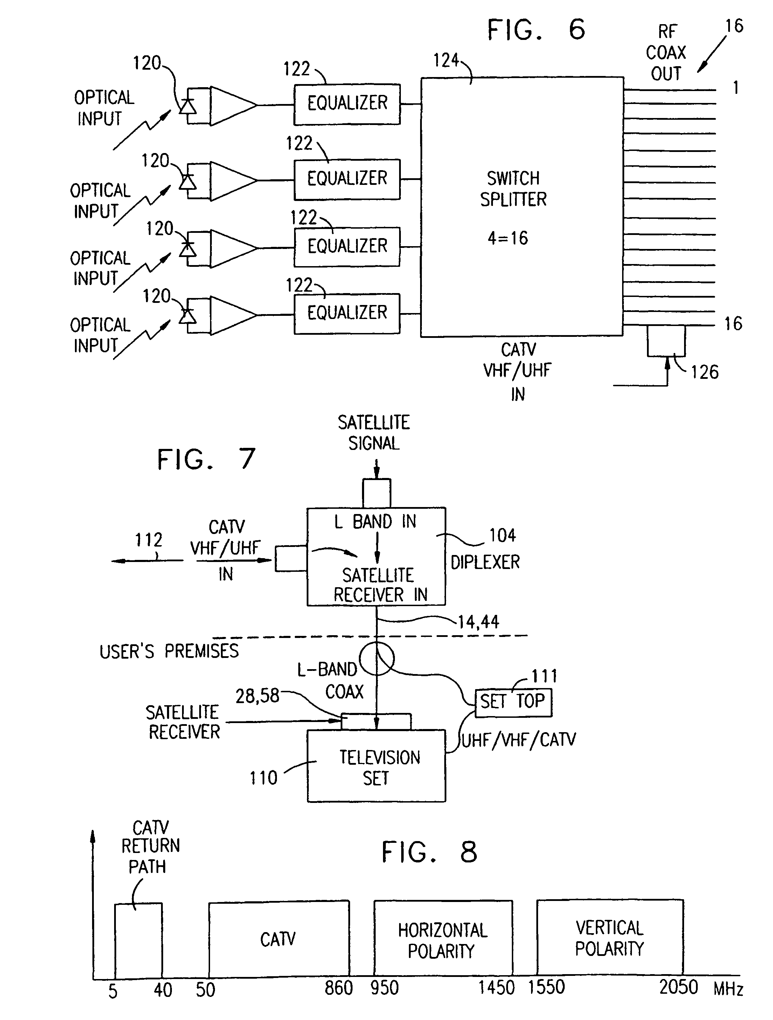

Satellite receiver and distribution units 16 preferably provide the following functions:
1) receive optical signals and convert to RF signals;
2) equalize any frequency tilt which is caused primarily by the coaxial cable to the satellite receiver:
3) diplex the UHF/VHF/CATV signal from 50-860 MHz with the L-band signal, allowing a return path using the frequency band 5-40 MHz,
4) split the signal into a number of outputs, for example 16 outputs as shown hereinbelow with reference to Fig 6, and
5) provide an interface to standard satellite receivers A common feature is for the user to choose which satellite signal he wishes This may be achieved with a voltage level (13V or 18V) or a tone on the coaxial cable input to the satellite receiver Satellite receiver and distribution units 16 may sense this voltage or tone and may switch to the indicated satellite receiver It is appreciated that the functions described hereinabove with reference to Fig. 1 may be separated physically into different modules

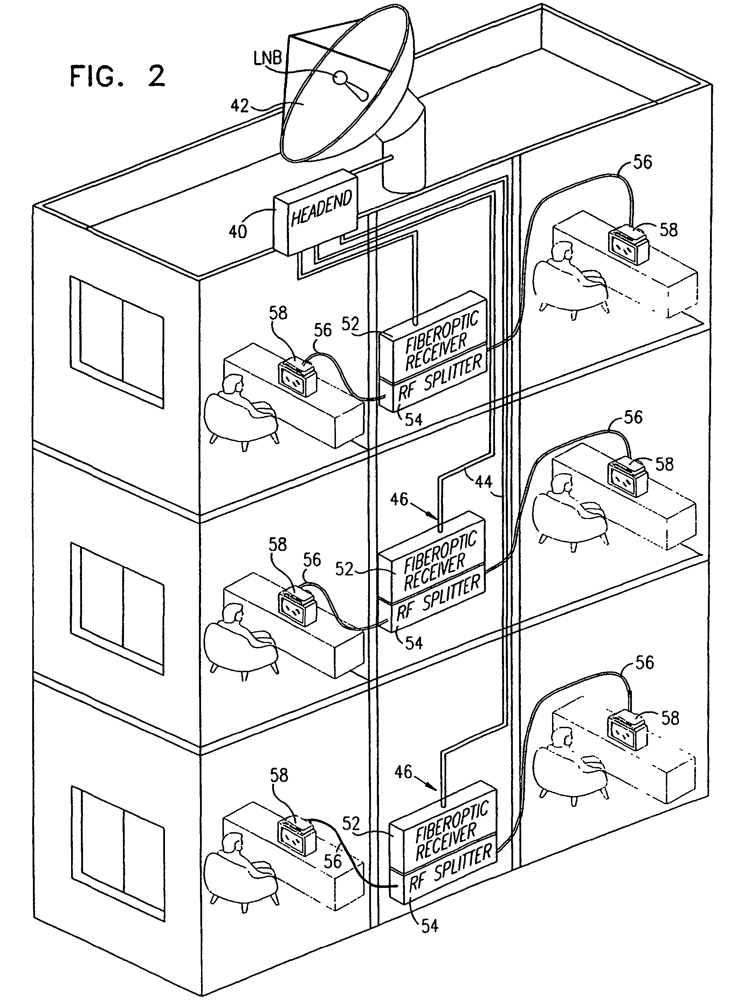

Reference is now made to Fig 2, which is a simplified pictorial illustration of a satellite signal distribution system constructed and operative in accordance with another preferred embodiment of the present invention

In the embodiment of Fig 2, a headend 40 which receives satellite signals from a satellite antenna 42 includes an RF fiberoptic transmitter which transmits a combined signal along multiple parallel optical fibers 44, each of which supplies the satellite signals to a satellite signal receive and distribution unit 46

Each of the receive and distribution units 46 comprises a fiberoptic receiver 52 which outputs to an RF splitter 54 which supplies RF signals along individual satellite signal links 56, each of which supplies at least one satellite receiver 58.

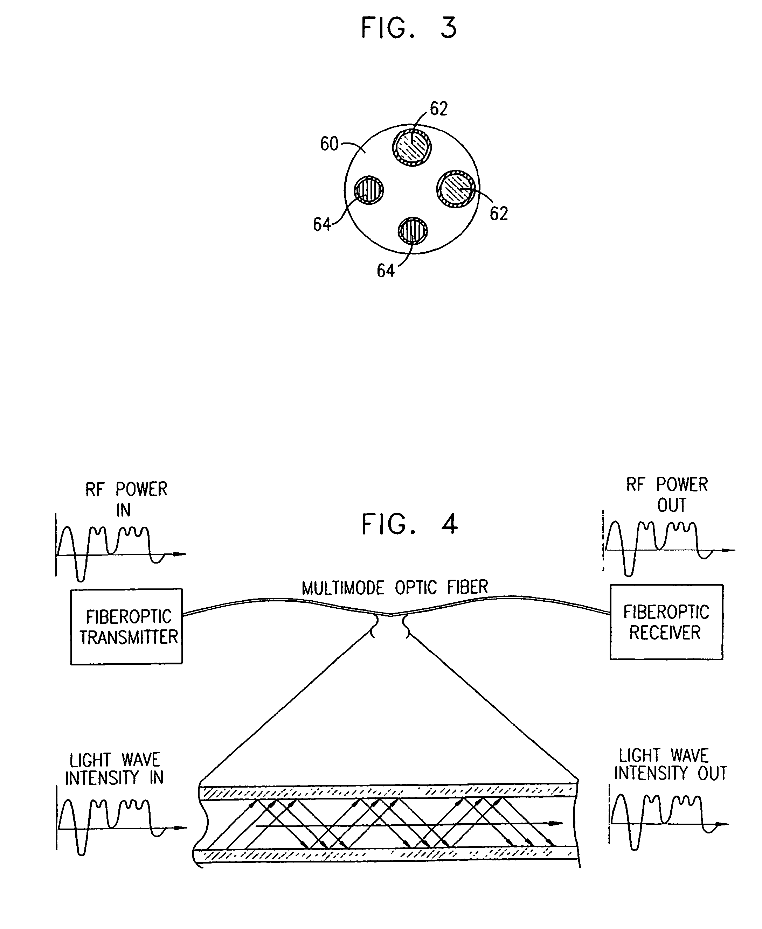

Reference is now made to Fig 3, which is a sectional illustration taken along lines III - III in Fig. 1, illustrating the use of a composite cable 60 in accordance with one embodiment of the present invention. It is seen that the composite cable 60 includes a plurality of copper wires 62 for providing power to receive and distribution units (16 and 46) and a plurality of optical fibers 64, which are preferably multimode optical fibers Any combination and quantity of copper wires 62 and optical fibers 64 may be used.

Alternatively, receive and distribution units (16 and 42) may be powered by the power intended for LNB's in usual single-user installations.

Fig 4 illustrates a multimode optical fiber link carrying an RF signal in accordance with a preferred embodiment of the present invention. It is a particular feature of the present invention that such a multimode optical fiber link is employed to transmit analog signals, whether or not digitally modulated, having a frequency in excess of about 1 GHz between the headend (10 or 40) and the receive and distribution units (16 and 46)

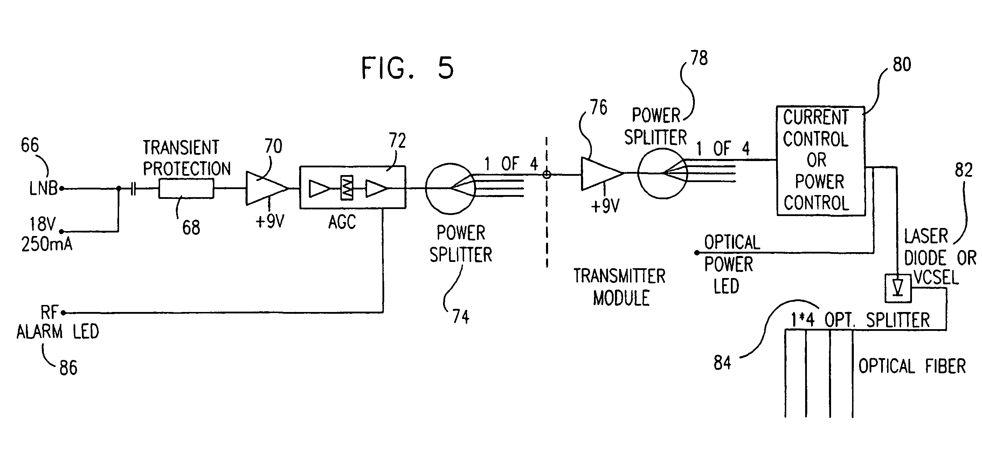

Reference is now made to Fig. 5 which is a simplified block diagram illustration of an optical transmitter useful in the present invention. An RF L-band signal is input via coaxial cable from a low noise block (LNB) converter 66, power being provided along the same coaxial cable. The input is protected against lightning strikes using a transient protection circuit 68 The signal is then amplified using an amplifier 70 which generally includes an automatic gain control (AGC) 72 that typically activates an alarm LED 86 should the signal strength fall below a predetermined level. The output power of the amplifier section is split, typically 4 ways, via a power splitter 74 to a plurality of transmitter modules. Each transmitter module includes an amplifier 76 for providing further amplification as required. The output of amplifier 76 may drive a laser diode 82 or may be split, typically 4 ways, via a power splitter 78, or via taps (not shown), to drive a plurality of laser diodes 82. Current or power control may be provided by a current or power control unit 80 as is well known in the art. Alternatively, the optical power of each laser may be split using a fiber optical splitter 84 such as 1 X 4 lasers rather than using 4 individual laser diodes in the transmitter module.

Reference is now made to Fig. 6, which is a simplified block diagram illustration of a satellite signal receive and distribution unit constructed and operative in accordance with a preferred embodiment of the present invention including apparatus for combining CATV and satellite signal feeds onto a single coaxial cable. A plurality of fiber optic receivers 120, each for a separate signal, each output via an equalizer 122 to a switch splitter 124 which selectably provides a signal to each of a multiplicity of individual satellite signal links 26 or 56 (Fig 1 or Fig. 2). A CATV feed 126 may be coupled to each of the individual satellite signal links, as illustrated conceptually below with reference to Fig. 7.

Fig 7 provides a conceptual illustration of combining CATV/UHF/VHF and satellite signals onto a single coaxial cable, which in accordance with a preferred embodiment of the present invention, is one of the functions of the receive and distribution units (16 and 46) Receive and distribution units (16 and 46) preferably include a diplexer 104 that receives a satellite signal from a satellite antenna, such as antenna 12 or 42, and also receives a non-satellite television signal, such as a CATV input, typically including both UHF and VHF signals The diplexer 104 outputs via coaxial cable 14 or 44 (Figs. 1 and 2 respectively) The combined signals may be supplied through the apparatus of Figs. 1 or 2. An important advantage of the present invention is that by outputting to a single coaxial cable (14 or 44), significant savings in cable laying are achieved

Just upstream of the satellite receiver, a demultiplexer splits off the CATV signals from the L-band satellite signals for separate supply thereof to the appropriate inputs of the satellite receiver 28 or 58 (Fig. 1 or Fig. 2) and the television set 110 A set top 111 may be provided for reception of CATV signals.

Provision may be made for interactive television, wherein a return signal 112 may be sent by an end user of television set 110 via the non-satellite television signal port of diplexer 104. Return signal 112 is typically low frequency, in the range of 5 - 50 MHz.

Reference is now made to Fig. 8 which illustrates a frequency spectrum of a satellite signal distribution system using frequency stacking in accordance with a preferred embodiment of the present invention. As mentioned hereinabove with reference to Fig. 5, an RF L-band signal may be input via coaxial cable from a low noise block (LNB) converter. An LNB typically outputs two polarities These polarities may be put on one single coaxial cable by up converting one of them, preferably from a 950-1450 MHz band to a higher band of 1550-2050 MHz. This technique is known as frequency stacking and has been in commercial use since at least 1993. An advantage of implementing this technique with the satellite signal distribution systems of the present invention is that switching described hereinabove with reference to Fig. 6 is not required and the satellite signal may be split at a user site to multiple television sets. Frequency stacking may be implemented with any of the satellite signal distribution systems of the present invention, such as those shown in Figs. 1 and 2.

As described hereinabove, in the satellite signal distribution systems of Figs. 1 and 2, the headend (10 or 40 respectively) receives satellite signals from the satellite antenna (12 or 42) and the RF fiberoptic transmitter transmits a combined signal along optical fibers (14 or 44) to satellite signal receive and distribution units (16 or 46). The satellite signal receive and distribution units (16 or 46) receive optical signals and convert to RF signals, and diplex the UHF/VHF/CATV signal from 50-860 MHz with the L-band signal, allowing a return path using the frequency band 5-40 MHz. By using fiberoptic receivers (22 or 52) and RF splitters (24 or 54), the signal is split into a number of outputs, and the signals are demultiplexed to standard satellite receivers (28 or 58) and television sets (110)

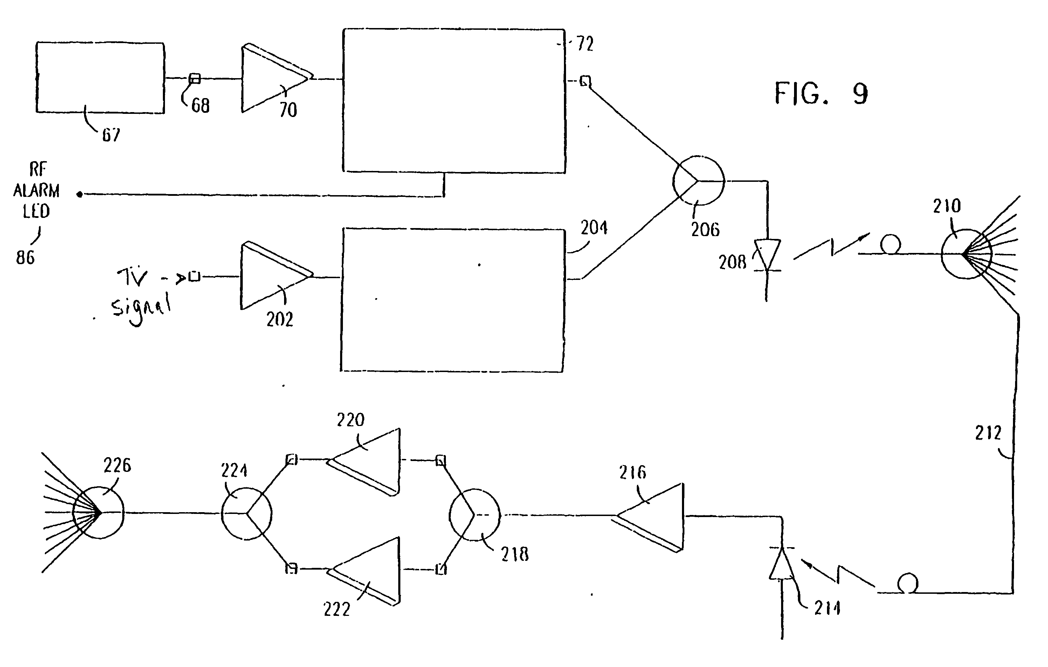

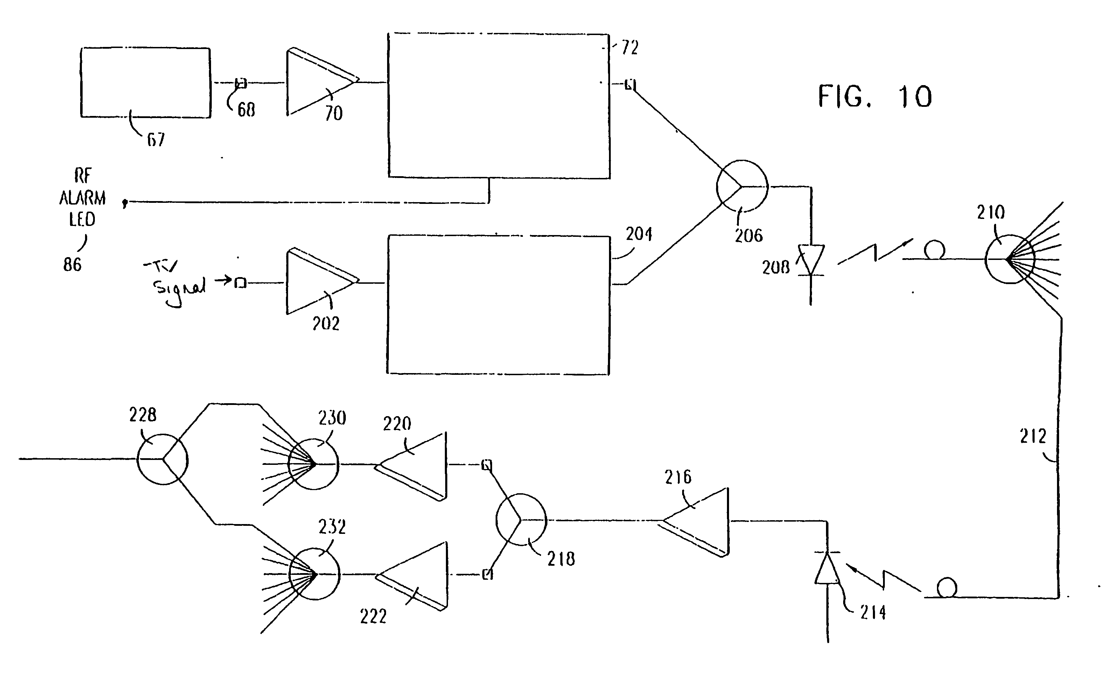

In accordance with yet a further preferred embodiment of the present invention, the UHF/VHF/CATV signal and the satellite signal may be alternatively combined, instead of at the receiver, at the fiberoptic transmitter, preferably located in the headend, as will be now described with reference to Figs 9 and 10.

Reference is now made to Fig. 9 which is a simplified block diagram illustration of an optical transmitter satellite-and-television-signal combiner system constructed and operative in accordance with a preferred embodiment of the present invention. In a similar fashion as described hereinabove with reference to Fig. 5, an RF L-band signal is input via coaxial cable from a frequency stacker or up-converter 67, power being provided along the same coaxial cable. The input may be protected against lightning strikes using transient protection circuit 68. The signal is then amplified using amplifier 70 which generally includes automatic gain control (AGC) 72 that typically activates an alarm LED 86 should the signal strength fall below a predetermined level.

In parallel to the RF L-band signal input, a television (UHF/VHF/CATV) signal is amplified using an amplifier 202 which generally includes an automatic gain control (AGC) 204 The outputs of the AGC's 72 and 204 are combined by a diplexer/combiner 206 to drive a distributed feedback (DFB) laser 208, such as a laser diode. The optical power of laser 208 is preferably split using a fiber optical splitter 210 and fed to a plurality of optical receivers via optical fibers 212. Each optical fiber 212 preferably feeds a photodiode 214 which converts the optical signals back to electrical signals which are preferably outputted to an amplifier 216. A demultiplexer/splitter 218 then demultiplexes the electrical signals to satellite and television amplifiers 220 and 222, respectively. The satellite and television signals are combined by a diplexer 224 and then split by a splitter 226, preferably a resistance splitter, for feeding standard satellite receivers and television sets.

An advantage of the system of Fig. 9 is that only one diplexer 224 is required. However, a disadvantage of this system is that the splitter 226 is quite lossy and it is difficult to obtain good isolation between output ports of the splitter 226.

Reference is now made to Fig. 10 which is a simplified block diagram illustration of an optical transmitter satellite-and-television-signal combiner system constructed and operative in accordance with another preferred embodiment of the present invention. The system of Fig. 10 is substantially identical with that of Fig. 9 with like numerals designating like elements The system of Fig 10 differs from that of Fig. 9 in that each of a plurality of N diplexers 228 combine the paired outputs of two N-way splitters 230 and 232, which split satellite and television signals, respectively. Splitters 230 and 232 are preferably narrower in band than splitter 226 of Fig. 9, thus having the advantage of reducing losses and increasing isolation between the output ports. Splitters 230 and 232 may be reactive splitters A disadvantage of the system of Fig. 10 is that N diplexers 228 are required yet another preferred embodiment of the present invention The system of the present embodiment is substantially identical with that of Fig. 9.

The system differs from that of Fig. 9 in that provision is made for interactive television, wherein a non-satellite television return path is provided. The return path preferably comprises sending a non-satellite television return signal via an amplifier to drive an optical emitter which outputs to a photodiode . The photodiode converts the optical signal to an electrical signal and sends the electrical signal via an amplifier to a non-satellite television signal port of a combiner . As described hereinabove, the return signal is typically low frequency, in the range of 5 - 50 MHz. The photodiode and amplifier may be packaged as an integrated optical module.

Reference is now made to still another preferred embodiment of the present invention. The system of the present embodiment is substantially identical with that of the previously described embodiment. The system of the present embodiment differs from that of the previously described embodiment in that the non-satellite television return path comprises sending the non-satellite television return signal not on separate fibers, but rather the return signal is sent on one fiber by means of a wavelength division multiplexer Alternatively, the wavelength division multiplexer may be an optical combiner. The multiplexor sends the optical signals on the same optical fiber to another wavelength division multiplexer which is connected to a splitter. The another wavelength division multiplexer outputs to photodiode as described with reference to the previously described embodiment. Optionally, an optical combiner may be connected to the another wavelength division multiplexer, in which case the combiner, photodiode and amplifier may be wholly or partially packaged as an integrated optical module.

It is appreciated that the systems of the previously described two embodiments may be implemented in the system of Fig. 10 as well.

Reference is now made to another preferred embodiment of the present invention. The system is substantially similar to that of Fig. 9 , except that the system of the present embodiment has a vertical or series architecture. An automatic gain control, operating between an attenuator and an automatic gain control amplifier, is preferably placed between the amplifier 216 and demultiplexer/splitter 218 shown in Figure 9. The automatic gain control line detects the output of the automatic gain control amplifier and sends a signal to an attenuator to change the output of the automatic gain control amplifier as necessary. The purpose, *inter alia*, of the automatic gain control is to ensure that all customers on all levels receive substantially the same power. This means that the automatic gain control minimizes the gain of the automatic gain control amplifier at the lowest level of the "daisy chain" series, and maximises the gain of the amplifier at the lowest level of the "daisy chain" series.

It will be appreciated by persons skilled in the art that the present invention is not limited by what has been particularly shown and described hereinabove. Rather the scope of the present invention is defined only by the claims which follow.

## Claims

1. A satellite signal distribution system comprising:
a headend (10, 40) operable to receive satellite signals from a satellite antenna and operable to directly convert the satellite signals to optical signals without further modulation;
a plurality of satellite signal receive and distribution units (16, 46);
a plurality of optical fiber links (14, 44) operable to communicate said optical signals between the headend and the plurality of satellite signal receive and distribution units; and
a multiplicity of satellite signal links (26, 56) operable to communicate satellite signals between each of said plurality of satellite signal receive and distribution units and plural satellite receivers (28, 58),
said satellite receive and distribution units including a diplexer (104) operable to output to a single coaxial cable (14, 44) a combination of said satellite signals and non-satellite signals and said diplexer further operable to provide a low frequency return path for sending a return signal (112) from a user to a source of said non-satellite television signal.

2. A system according to claim 1 wherein said plurality of optical fiber links are operable to communicate said satellite signals between the headend and the plurality of satellite signal receive and distribution units serially.

3. A system according to claim 1 or 2, further comprising a satellite antenna (12, 42) coupled to the headend.

4. A system according to claim 1 or 2, further comprising a plurality of satellite receivers (28, 58) coupled to at least some of the multiplicity of satellite signal links.

5. A system according to claim 1, wherein said headend, said plurality of satellite signal receive and distribution units, said plurality of optical fiber links and said multiplicity of satellite signal links are all operable to carry satellite signals in a 1-2.2 GHz frequency range.

6. A system according to claim 1, wherein said satellite receive and distribution units comprise apparatus (120) for receiving optical signals and converting to RF signals.

7. A system according to claim 1, wherein said satellite receive and distribution units comprise apparatus (122) for equalizing any frequency tilt caused by a coaxial cable connection to a satellite receiver.

8. A system according to claim 1, wherein said satellite receive and distribution units comprise a splitter (124) for splitting a signal into a number of outputs.

9. A system according to claim 1, wherein said satellite receive and distribution units comprise an interface to a satellite receiver.

10. A system according to claim 1, further comprising a coaxial cable connection to a satellite receiver wherein a single coaxial cable is operable to carry a signal having more than one polarity, one of the polarities being upconverted to a higher frequency band than another polarity.

11. A system according to claim 1, wherein:
the headend comprises a fiberoptic transmitter operable to combine satellite signals from a satellite antenna with non-satellite television signals;
said plurality of optical fiber links are operable to communicate said satellite and non-satellite signals between said headend and said plurality of signal receive and distribution units; and
said multiplicity of signal links are operable to communicate signals between each of said plurality of signal receive and distribution units and a plurality of satellite signal receivers and non-satellite signal receivers.

12. A system according to claim 11, wherein said fiberoptic transmitter comprises a laser (208) operable to convert said combined satellite signals and said non-satellite television signals into optical signals.

13. A system according to claim 12, further comprising a photodiode (214) operable to convert said optical signals into electrical signals.

14. A system according to claim 13, wherein each of said plurality of signal receive and distribution units comprises said photodiode.

15. A system according to claim 13, further comprising a splitter (218) for feeding said electrical satellite signals and said non-satellite television signals to a satellite receiver and to at least one of a television set and a CATV receiver, respectively.

16. A system according to claim 13, further comprising a plurality of splitter pairs in communication with said photodiode, each said pair comprising a splitter for satellite signals and a splitter for non-satellite television signals, wherein a plurality of diplexers are operable to combine an output of each said pair of said splitters for feeding said satellite signals and said non-satellite television signals to a satellite receiver and to at least one of a television set and a CATV receiver, respectively.

17. A system according to claim 1, wherein said return signal is sent on separate fibers.

18. A system according to claim 1, wherein said return signal is sent on a fiber by means of a wavelength division multiplexer (250).

## Patentansprüche

1. Satellitensignalverteilungssystem, das aufweist:
ein Kopfende (10, 40), das betreibbar ist, um Satellitensignale von einer Satellitenantenne zu empfangen, und betreibbar ist, um direkt die Satellitensignale in optische Signale ohne weitere Modulation umzuwandeln,
eine Mehrzahl von Satellitensignalempfangs- und -verteilungseinheiten (16, 46),
eine Mehrzahl von optischen Faserverbindungen (14, 44), die betreibbar sind, um die optischen Signale zwischen dem Kopfende und der Mehrzahl von Satellitensignalempfangs-und -verteilungseinheiten zu übertragen,
eine Mehrzahl von Satellitensignalverbindungen (26, 56), die betreibbar sind, um die Satellitensignale zwischen jeder der Mehrzahl von Satellitensignalempfangs- und -verteilungseinheiten und mehreren Satellitenreceivern (28, 58) zu übertragen,
wobei die Satellitenempfangs- und -verteilungseinheiten einen Diplexer (104) beinhalten, der betreibbar ist, um eine Kombination der Satellitensignale und Nichtsatellitensignale in ein einzelnes koaxiales Kabel (14, 44) auszugeben, und wobei der Diplexer weiterhin betreibbar ist, um ein Niederfrequenzrückgabepfad für das Senden eines Rückgabesignals (112) von einem Benutzer zu einer Quelle des Nichtsatellitenfernsehsignals bereitzustellen.

2. System nach Anspruch 1, bei dem die Mehrzahl von optischen Faserverbindungen betreibbar sind, um die Satellitensignale zwischen dem Kopfende und der Mehrzahl von Satellitensignalempfangs- und -verteilungseinheiten seriell zu übertragen.

3. System nach Anspruch 1 oder 2, das weiterhin aufweist eine Satellitenantenne (12, 42), die mit dem Kopfende verbunden ist.

4. System nach Anspruch 1 oder 2, das weiterhin aufweist eine Mehrzahl von Satellitenreceivem (28, 58), die mit zumindest einigen der Mehrzahl von Satellitensignalverbindungen verbunden sind.

5. System nach Anspruch 1, bei dem das Kopfende, die Mehrzahl von Satellitensignalempfangs- und -verteilungseinheiten, die Mehrzahl von optischen Faserverbindungen und die Vielzahl von Satellitensignalverbindungen alle betreibbar sind, um Satellitensignale in einem 1 - 2,2 GHz-Frequenzbereich zu tragen.

6. System nach Anspruch 1, bei dem die Satellitenempfangs- und -verteilungseinheiten eine Vorrichtung (120) für das Empfangen von optischen Signalen und das Umwandeln in Hochfrequenzsignalen aufweisen.

7. System nach Anspruch 1, bei dem die Satellitenempfangs- und -verteilungseinheiten eine Vorrichtung (122) für das Ausgleichen jeglicher Frequenzverschiebung, die durch eine Koaxialkabelverbindung zu einem Satellitenreceiver verursacht wurde, aufweisen.

8. System nach Anspruch 1, bei dem die Satellitenempfangs- und -verteilungseinheiten einen Splitter (124) für das Aufsplitten eines Signals in eine Anzahl von Ausgänge aufweisen.

9. System nach Anspruch 1, bei dem die Satellitenempfangs- und -verteilungseinheiten eine Schnittstelle zu einem Satellitenreceiver aufweisen.

10. System nach Anspruch 1, das weiterhin eine Koaxialkabelverbindung zu einem Satellitenreceiver aufweist, wobei ein einzelnes Koaxialkabel betreibbar ist, um ein Signal mit mehr als einer Polarität zu tragen, wobei eine der Polaritäten nach oben in ein höheres Frequenzband als eine andere Polarität konvertiert wird.

11. System nach Anspruch 1, bei dem:
das Kopfende einen faseroptischen Transmitter aufweist, der betreibbar ist, um Satellitensignale von einer Satellitenantenne mit Nichtsatellitenfernsehsignalen zu kombinieren,
wobei die Mehrzahl von optischen Faserverbindungen betreibbar sind, um die Satelliten-und Nichtsatellitensignale zwischen dem Kopfende und der Mehrzahl von Signalempfangs- und -verteilungseinheiten zu übertragen und
die Vielzahl von Signalverbindungen betreibbar sind, um Signale zwischen jeder der Mehrzahl von Signalempfangs- und -verteilungseinheiten und einer Mehrzahl von Satellitensignalreceivern und Nichtsatellitensignalreceivern zu übertragen.

12. System nach Anspruch 11, bei dem der faseroptische Transmitter einen Laser (208) aufweist, der betreibbar ist, um die kombinierten Satellitensignale und die Nichtsatellitenfemsehsignale in optische Signale zu wandeln.

13. System nach Anspruch 12, das weiterhin eine Fotodiode (214) aufweist, die betreibbar ist, um die optischen Signale in elektrische Signale umzuwandeln.

14. System nach Anspruch 13, bei dem jede der Mehrzahl von Signalempfangs- und - verteilungseinheiten die Fotodiode aufweist.

15. System nach Anspruch 13, das weiterhin einen Splitter (218) aufweist für das Zuführen der elektrischen Satellitensignale und der Nichtsatellitenfernsehsignale zu einem Satellitenreceiver und zumindest ein Fernsehgerät oder einem CATV-Receiver.

16. System nach Anspruch 13, das weiterhin aufweist eine Mehrzahl von Splitterpaaren in Verbindung mit der Fotodiode, wobei jedes der Paare einen Splitter für Satellitensignale und einen Splitter für Nichtsatellitenfernsehsignale aufweist, wobei eine Mehrzahl von Diplexern betreibbar sind, um eine Ausgabe von jedem der Paare der Splitter zu kombinieren für das Zuführen der Satellitensignale und der Nichtsatellitenfemsehsignale zu einem Satellitenreceiver und zu einem Fernsehgerät oder einem CATV-Receiver.

17. System nach Anspruch 1, wobei das Rückkehrsignal auf getrennten Fasern gesendet wird.

18. System nach Anspruch 1, wobei das Rückgabe- bzw. Rückkehrsignal auf einer Faser gesendet wird mit Hilfe eines Wellenlängenmultiplexers (250).

## Revendications

1. Système de distribution de signaux de type satellite, comprenant :
une tête de réseau (10, 40) ayant pour fonction de recevoir des signaux de satellite d'une antenne de satellite et ayant pour fonction de convertir directement les signaux de type satellite en des signaux optiques sans autre modulation ;
une pluralité d'unités de réception et de distribution de signaux de type satellite (16, 46) ;
une pluralité de liaisons par fibres optiques (14, 44) ayant pour fonction de transmettre lesdits signaux optiques entre la tête de réseau et la pluralité d'unités de réception et de distribution de signaux de type satellite ; et
une multiplicité de liaisons de signaux de satellite (26, 56) ayant pour fonction de transmettre des signaux de satellite entre chacune de ladite pluralité d'unités de réception et de distribution de signaux de type satellite et une pluralité de récepteurs de satellite (28, 58),
lesdites unités de réception et de distribution de signaux de satellite comportant un diplexeur (104) ayant pour fonction de délivrer en sortie à un câble coaxial unique (14, 44) une combinaison desdits signaux de type satellite et de signaux de type non-satellite et ledit diplexeur ayant en outre pour fonction de fournir un trajet de retour à basse fréquence pour envoyer un signal de retour (112) d'un utilisateur à une source dudit signal de télévision de type non-satellite.

2. Système selon la revendication 1, dans lequel ladite pluralité de liaisons par fibres optiques a pour fonction de transmettre en série lesdits signaux de type satellite entre ladite tête de réseau et la pluralité d'unités de réception et de distribution de signaux de type satellite.

3. Système selon la revendication 1 ou 2, comprenant en outre une antenne de satellite (12, 42) reliée à la tête de réseau.

4. Système selon la revendication 1 ou 2, comprenant en outre une pluralité de récepteurs de satellite (28, 58) reliés à au moins certaines de la multiplicité de liaisons de signaux de type satellite.

5. Système selon la revendication 1, dans lequel ladite tête de réseau, ladite pluralité d'unités de réception et de distribution de signaux de type satellite, ladite pluralité de liaisons par fibres optiques, et ladite multiplicité de liaisons de signaux de type satellite ont toutes pour fonction de transporter des signaux de type satellite dans une gamme de fréquence de 1 à 2,2 GHz.

6. Système selon la revendication 1, dans lequel lesdites unités de réception et de distribution de signaux de type satellite comprennent des appareils (120) pour recevoir des signaux optiques et les convertir en des signaux RF.

7. Système selon la revendication 1, dans lequel lesdites unités de réception et de distribution de signaux de type satellite comprennent des appareils (122) pour égaliser l'éventuelle pente de fréquence provoquée par une connexion par câble coaxial à un récepteur satellite.

8. Système selon la revendication 1, dans lequel lesdites unités de réception et de distribution de signaux de type satellite comprennent un séparateur (124) pour séparer un signal en un certain nombre de sorties.

9. Système selon la revendication 1, dans lequel lesdites unités de réception et de distribution de signaux de type satellite comprennent une interface avec un récepteur de satellite.

10. Système selon la revendication 1, comprenant en outre une connexion par câble coaxial à un récepteur de satellite dans lequel un câble coaxial unique a pour fonction de transporter un signal ayant plus d'une polarité, l'une des polarités étant soumise à une conversion-élévation à une bande de fréquences supérieure à celle d'une autre polarité.

11. Système selon la revendication 1, dans lequel :
la tête de réseau comprend un émetteur à fibres optiques ayant pour fonction de combiner des signaux de type satellite provenant d'une antenne de satellite à des signaux de télévision de type non-satellite ;
ladite pluralité de liaisons par fibres optiques a pour fonction de transmettre lesdits signaux de type satellite et de type non-satellite entre ladite tête de réseau et ladite pluralité d'unités de réception et de distribution de signaux ; et
ladite multiplicité de liaisons de signaux a pour fonction de transmettre des signaux entre chacune de ladite pluralité d'unités de réception et de distribution de signaux et une pluralité de récepteurs de signaux de type satellite et de récepteurs de signaux de type non-satellite.

12. Système selon la revendication 11, dans lequel ledit émetteur à fibres optiques comprend un laser (208) ayant pour fonction de convertir lesdits signaux de type satellite et lesdits signaux de télévision de type non-satellite combinés en des signaux optiques.

13. Système selon la revendication 12, comprenant en outre une photodiode (214) ayant pour fonction de convertir lesdits signaux optiques en des signaux électriques.

14. Système selon la revendication 13, dans lequel chacune de ladite pluralité d'unités de réception et de distribution de signaux comprend ladite photodiode.

15. Système selon la revendication 13, comprenant en outre un séparateur (218) pour fournir respectivement lesdits signaux électriques de type satellite et lesdits signaux de télévision de type non-satellite à un récepteur de satellite et à au moins l'un d'un poste de télévision et d'un récepteur de télévision par câble (CATV).

16. Système selon la revendication 13, comprenant en outre une pluralité de paires de séparateurs en communication avec ladite photodiode, chacun de ladite paire de séparateurs comprenant un séparateur pour signaux de type satellite et un séparateur pour signaux de télévision de type non-satellite, dans lequel une pluralité de diplexeurs a pour fonction de combiner une sortie de chacun de ladite paire desdits séparateurs pour fournir respectivement lesdits signaux de type satellite et lesdits signaux de télévision de type non-satellite à un récepteur de satellite et à au moins l'un d'un poste de télévision et d'un récepteur CATV.

17. Système selon la revendication 1, dans lequel ledit signal de retour est envoyé sur des fibres distinctes.

18. Système selon la revendication 1, dans lequel ledit signal de retour est envoyé sur une fibre au moyen d'un multiplexeur à répartition en longueur d'onde (250).
